# EUROPEAN PATENT SPECIFICATION

(11) **EP 3 141 464 B1**
(45) Date of publication and mention of the grant of the patent: **05.09.2018**
(21) Application number: 16185844.4
(22) Date of filing: 26.08.2016
(51) Int. Cl.: B62J 15/00, B60T 5/00

(54) **REAR FENDER FOR MOTORCYCLE**
HINTERER KOTFLÜGEL FÜR EIN MOTORRAD
GARDE-BOUE ARRIÈRE POUR MOTOCYCLE

(30) Priority: 08.09.2015 JP 2015176807
(43) Date of publication of application: 15.03.2017
(73) Proprietor: Honda Motor Co., Ltd., Tokyo 107-8556 (JP)
(72) Inventor: FUTAMATA, Takeshi, SAITAMA, 351-0193 (JP); YAEGASHI, Hirofumi, SAITAMA, 351-0193 (JP); ONO, Yu, SAITAMA, 351-0193 (JP)
(74) Representative: Fioravanti, Corrado

(56) References cited:
- JP-A- S62 173 384
- JP-A- S62 194 986
- JP-A- 2003 072 623
- JP-U- S5 317 072
- JP-U- S57 185 693
- JP-U- S61 146 478
- JP-U- S62 187 986
- JP-U- S63 105 586

## Description

The present invention relates to a fender structure of a saddle-type vehicle.

In the past, in fender structures of saddle-type vehicles, a structure in which a fender that covers at least part of a rear wheel is attached to the upper part of a swing arm that supports the rear wheel is known (for example, refer to Japanese Patent Laid-Open No. 2010-70072). Regarding the fender disclosed in said document, a structure in which a rib protruding to the inside of the fender is provided on the side surface of the fender is depicted in a diagram, and the rigidity of the fender is enhanced by this structure. A saddle-type vehicle as defined in the preamble of claim 1 is known from JP S62 173384 A. Another saddle-type vehicle is disclosed in JP 2003 072623 A.

Incidentally, in recent years, improvement in the fuel consumption has been desired in the saddle-type vehicles. However, the resistance of the relative wind flowing around a fender also affects the fuel consumption.

The present invention is made in view of the above-described circumstances and intends to enable control of the relative wind flowing around a fender and improvement in the fuel consumption in a fender structure of a saddle-type vehicle.

In order to achieve the above-described object, the present invention provides a saddle-type vehicle including a fender (90), as defined in claim 1. The fender covers at least part of a rear wheel (3) and is attached to an upper part of a swing arm (12) that supports the rear wheel (3). The present invention is characterised in that, in the fender structure, opening planes (120, 130) that accept a relative wind from a front side and cause the relative wind to flow rearward are made in side surfaces (108b, 109b) of the fender (90).

According to the present invention, the opening planes that accept the relative wind from the front side and cause the relative wind to flow rearward are made in the side surfaces of the fender that covers at least part of the rear wheel. This causes the relative wind from the front side to pass through the opening planes in the side surfaces of the fender and go rearward. Thus, the resistance due to the relative wind can be reduced and the fuel consumption can be improved.

Furthermore, in the present invention a brake calliper (93) is disposed on an extended line (L) of a straight line that extends to pass through the opening plane (130) and is parallel to an upper surface (104b) of the swing arm (12) in side view.

According to the present invention, in side view, the brake calliper is disposed on the extended line of the straight line that extends to pass through the opening plane and is parallel to the upper surface of the swing arm. The relative wind passing through the opening plane flows along the extended line of the straight line parallel to the upper surface of the swing arm and impinges on the brake calliper located on this extended line. Thus, the resistance can be reduced by causing the relative wind to flow into the opening plane. In addition, the brake disc or the brake calliper can be cooled by the relative wind that has flowed into the opening plane.

In addition, the present invention is characterised in that the opening planes (120, 130) are made perpendicular to upper surfaces (102, 104b) of the swing arm (12).

According to the present invention, the opening planes are made perpendicular to the upper surfaces of the swing arm. Thus, the opening planes can be compactly made according to the shapes of the upper surfaces of the swing arm. In addition, the opening planes can be made inconspicuous from the outside, which provides favourable appearance.

Moreover, the present invention is characterised in that the opening planes (120, 130) are formed with labyrinth structures (125, 135) to prevent an inside of the opening planes (120, 130) from being visible through apertures of the opening planes (120, 130) in side view. According to the present invention, the opening planes are formed with the labyrinth structures to prevent the inside of the opening planes from being visible through the apertures thereof in side view. This can prevent rainwater, gravel, and so forth from the lateral sides from entering the inside from the opening planes, and improve the appearance. Furthermore, the present invention is characterised in that the opening plane (130) is made at a position overlapping with an exhaust unit (35) in side view.

According to the present invention, the opening plane is made at a position overlapping with the exhaust unit in side view. Thus, by utilizing an airstream flowing into the opening plane made at the position overlapping with the exhaust unit, the exhaust unit can be effectively cooled and accumulation of heat around the exhaust unit can be suppressed.

In addition, the present invention is characterised in that the fender (90) monolithically includes a chain case part (108) that covers a chain (37) to drive the rear wheel (3).

According to the present invention, the fender monolithically includes the chain case part that covers the chain to drive the rear wheel. Therefore, a dedicated chain case does not need to be additionally provided and the number of parts can be reduced.

Moreover, the present invention is characterised in that the fender (90) has inclined surfaces (121a, 131a) extending outward in a vehicle width direction from a front side toward the opening planes (120, 130).

According to the present invention, the relative wind can be induced to the opening planes along the inclined surfaces extending outward in the vehicle width direction from the front side toward the opening planes. This can cause the relative wind to efficiently flow into the opening planes and can improve the fuel consumption.

Furthermore, the present invention is characterised in that a brake hose (94) connected to the brake calliper (93) is provided to pass through an inside of the fender (90), and the fender (90) is provided to cover the brake hose (94) disposed inside from an upper side, and at least part of the brake hose (94) is supported by a hose support part (118) provided on the fender (90).

According to the present invention, at least part of the brake hose disposed inside the fender is supported by the hose support part provided on the fender. This can protect the brake hose from the upper side by the fender and support the brake hose with a simple structure to support it on the fender.

In the fender structure of a saddle-type vehicle according to the present invention, the relative wind passes through the opening planes in the side surfaces of the fender and goes rearward. Thus, the resistance due to the relative wind can be reduced and the fuel consumption can be improved.

Furthermore, the brake disc or the brake calliper can be cooled by the relative wind that has flowed into the opening plane.

In addition, the opening planes can be compactly made.

Moreover, by the labyrinth structures of the opening planes, rainwater, gravel, and so forth from the lateral sides can be prevented from entering the opening planes and the appearance can be improved.

Furthermore, the exhaust unit can be cooled by utilizing an airstream flowing into the opening plane.

In addition, a dedicated chain case does not need to be additionally provided and the number of parts can be reduced.

Moreover, the relative wind can be efficiently induced to the opening planes along the inclined surfaces.

Furthermore, the brake hose can be supported with a simple structure to support it on the fender.

Further features and advantages of the invention will become apparent from the following description to be considered together with the accompanying drawings, wherein:
FIG. 1 is a right side view of a motorcycle according to an embodiment of the present invention;
FIG. 2 is a left side view of the peripheral part of an inner fender and a swing arm;
FIG. 3 is a right side view of the peripheral part of the inner fender and the swing arm;
FIG. 4 is a perspective view depicting the state in which the inner fender is attached to the swing arm;
FIG. 5 is a right side view of the state in which the inner fender is attached to the swing arm;
FIG. 6 is a plan view when the state in which the inner fender is attached to the swing arm is viewed from the upper side;
FIG. 7 is a right side view of the inner fender;
FIG. 8 is a plan view when the inner fender is viewed from the upper side; and
FIG. 9 is a sectional view along line IX-IX in FIG. 5.

An embodiment of the present invention will be described below with reference to the drawings. In the description, directions such as front, rear, left, right, upward, and downward directions are the same as directions with respect to the vehicle body unless otherwise noted. Furthermore, symbol FR depicted in the respective diagrams indicates the vehicle body front side. In addition, symbol UP indicates the vehicle body upper side and symbol LH indicates the vehicle body left side.

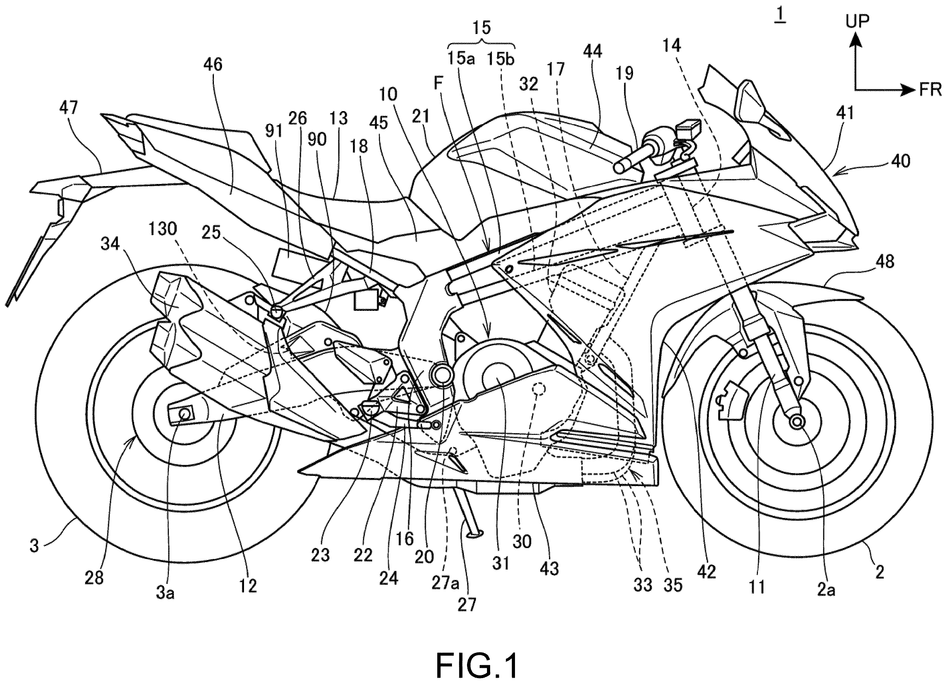

FIG. 1 is a right side view of a motorcycle according to the embodiment of the present invention. In FIG. 1, among components provided as a pair of left and right components, only components on the right side are depicted.

A motorcycle 1 is a vehicle in which an engine 10 as a power unit is supported by a vehicle body frame F and a front fork 11 that supports a front wheel 2 is steerably supported by the front end of the vehicle body frame F and a swing arm 12 that supports a rear wheel 3 is provided on the rear side of the vehicle body frame F. The motorcycle 1 is a saddle-type vehicle in which a seat 13 on which a rider sits in a straddling manner is provided over the rear part of the vehicle body frame F.

The vehicle body frame F includes the following components: a head pipe 14 that is provided at the front end and pivotally supports the front fork 11; a pair of left and right main frames 15 extending rearward from the head pipe 14 with an obliquely-downward inclination; a pair of left and right pivot frames 16 extending downward from the rear ends of the main frames 15; a pair of left and right down-frames 17 extending downward from the front parts of the main frames 15; and a pair of left and right seat frames 18 extending in an upward rear direction from the upper parts of the pivot frames 16 and the rear parts of the main frames 15 to the vehicle rear end part. Each main frame 15 includes an upper frame part 15a that links the upper part of the head pipe 14 and the pivot frame 16 and a lower frame part 15b extending under the upper frame part 15a.

A driver who sits on the seat 13 steers the front wheel 2 through a handlebar 19 attached to the upper end of the front fork 11. The front wheel 2 is pivotally supported by a front wheel axle 2a provided at the lower end part of the front fork 11.

The front end part of the swing arm 12 is pivotally supported by a pivot shaft 20 that joins the left and right pivot frames 16 in the vehicle width direction and the swing arm 12 swings in the upward-downward direction around the pivot shaft 20. The swing arm 12 and the vehicle body frame F are joined with the intermediary of a rear suspension (not depicted). The rear wheel 3 is pivotally supported by a rear wheel axle 3a inserted in the rear end part of the swing arm 12.

The seat 13 is supported by the seat frames 18. A fuel tank 21 is provided over the main frames 15 continuously with the front edge of the seat 13.

On the rear side of the lower parts of the left and right pivot frames 16, step holders 22 extending rearward are provided as a pair of left and right components. A pair of left and right main steps 23 on which a driver who sits on the seat 13 puts feet are attached to the step holders 22 and are located on the rear side of the pivot frames 16. A brake pedal 24 used by the driver for operation of a hydraulic brake system 28 of the rear wheel 3 is provided on the front side of the right main step 23.

A pair of left and right tandem steps 25 on which a pillion rider who sits on the rear part of the seat 13 puts feet are supported by a pair of left and right tandem step holders 26 extending from the seat frames 18 toward the lower rear side.

A side stand 27 is supported by the lower part of the pivot frame 16 on the left side (one side). The side stand 27 is allowed to be freely folded by pivoting around a pivot shaft 27a.

The engine 10 includes a crankcase 31 that supports a crankshaft 30 extending in the vehicle width direction and a cylinder unit 32 extending upward from the upper surface of the front part of the crankcase 31.

The engine 10 is supported by the vehicle body frame F in a suspended manner and is disposed on the front side of the pivot frames 16 and under the main frames 15.

To the engine 10, an exhaust unit 35 including a pair of exhaust pipes 33 and a muffler 34 is connected. The exhaust pipes 33 are led out from an exhaust port (not depicted) disposed in the front surface of the cylinder unit 32 and pass under the crankcase 31 to extend rearward. The muffler 34 is disposed on the outer lateral side of the right side (the other side) of the swing arm 12 and is connected to the rear end parts of the exhaust pipes 33 on the rear side of the right pivot frame 16.

The motorcycle 1 includes a vehicle body cover 40 that covers the vehicle body composed of the vehicle body frame F, the engine 10, and so forth. The vehicle body cover 40 includes a front cowl 41 disposed in front of the head pipe 14, a pair of left and right middle cowls 42 (cowls) that are continuous with the front cowl 41 and extend rearward, and an under-cowl 43 that is continuous with the lower parts of the middle cowls 42 and extends rearward.

Furthermore, the vehicle body cover 40 includes a tank cover 44 that covers the fuel tank 21, a pair of left and right under-seat cowls 45 that are continuous with the upper parts of the middle cowls 42 and extend rearward, and a rear cowl 46 that covers the seat frames 18.

A rear fender 47 that covers the upper side of the rear wheel 3 extends toward the lower rear side continuously with the lower surface of the rear cowl 46. A front fender 48 that covers the front wheel 2 from the upper side is supported by the front fork 11.

Moreover, the motorcycle 1 includes an inner fender 90 (fender) that covers the upper part of the front end part of the rear wheel 3 from the upper side.

A reservoir tank 91 of the above-described rear suspension is disposed over the inner fender 90 and under the seat frames 18.

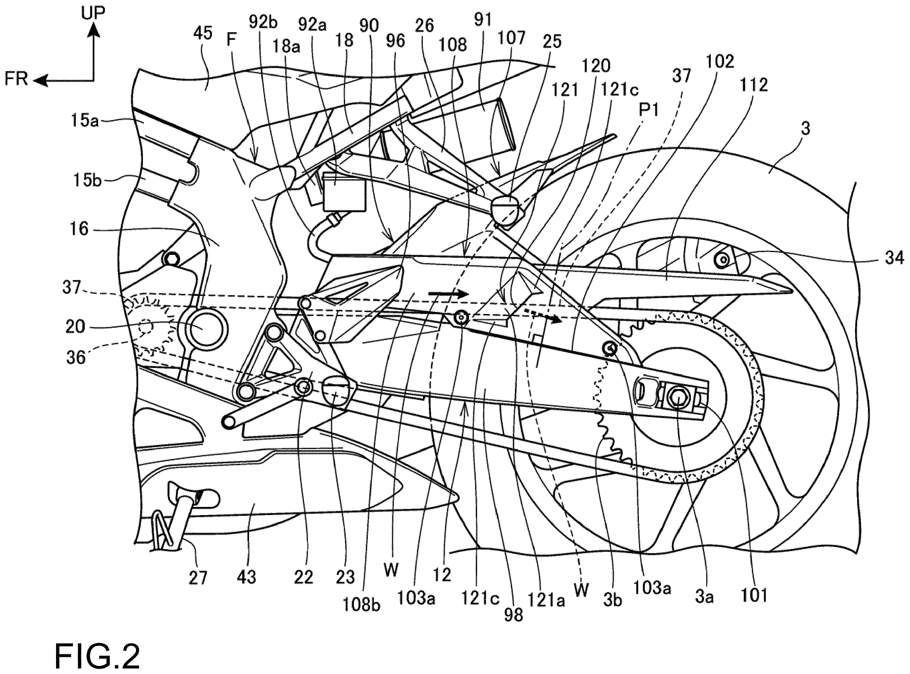

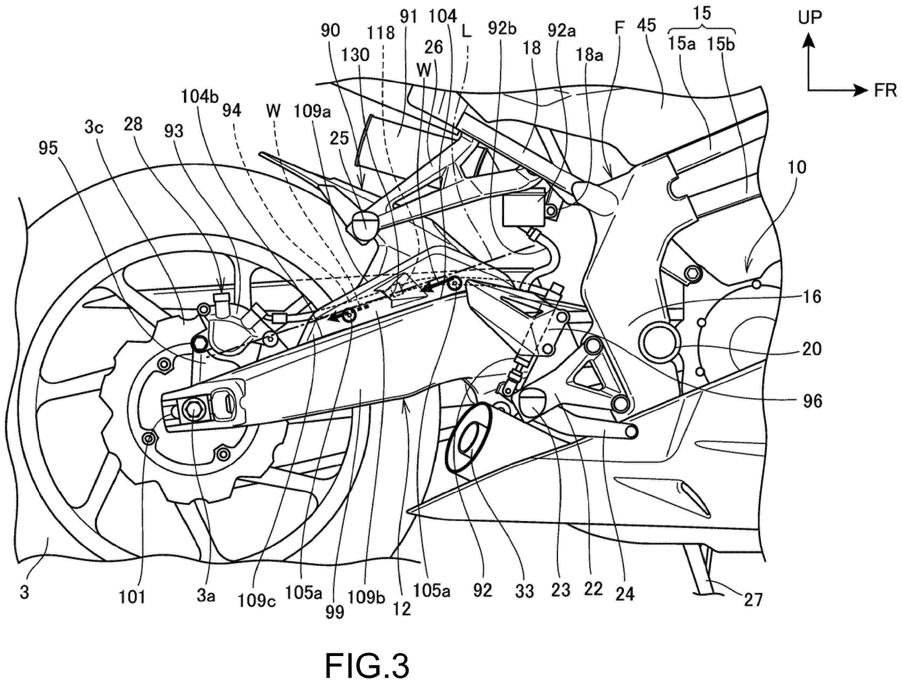

FIG. 2 is a left side view of the peripheral part of the inner fender 90 and the swing arm 12. FIG. 3 is a right side view of the peripheral part of the inner fender 90 and the swing arm 12. In FIG. 3, the state in which the muffler 34 is removed is depicted.

As depicted in FIG. 2, an output shaft 36 is provided to protrude toward the left side at the rear part of the crankcase 31 and a drive sprocket 36a is provided for the output shaft 36. The output of the engine 10 is transmitted to the rear wheel 3 via a drive chain 37 stretched between the drive sprocket 36a and a driven sprocket 3b of the rear wheel 3.

As depicted in FIG. 2 and FIG. 3, the inner fender 90 is attached to the upper surface of the swing arm 12 and is disposed on the front side of the rear wheel 3.

As depicted in FIG. 3, the brake system 28 includes the following components: the brake pedal 24; a tubular master cylinder 92 whose inside piston is moved by operation of the brake pedal 24; a brake disc 3c of the rear wheel 3; a brake calliper 93 that clamps the brake disc 3c by the hydraulic pressure of the above-described piston to carry out braking; and a brake hose 94 that couples the brake calliper 93 and the master cylinder 92. The brake calliper 93 is supported over the rear part of the swing arm 12 by a calliper holder 95 fixed to the rear wheel axle 3a.

The master cylinder 92 is fixed to the rear part of the right step holder 22. For the left and right step holders 22, plate-shaped heel guards 96 extending rearward are provided. The master cylinder 92 is disposed between the right heel guard 96 and the outer side surface of the front end part of the swing arm 12. A reservoir tank 92a of the master cylinder 92 is supported by a stay 18a extending downward from the right seat frame 18 and is connected to the master cylinder 92 by a hose 92b.

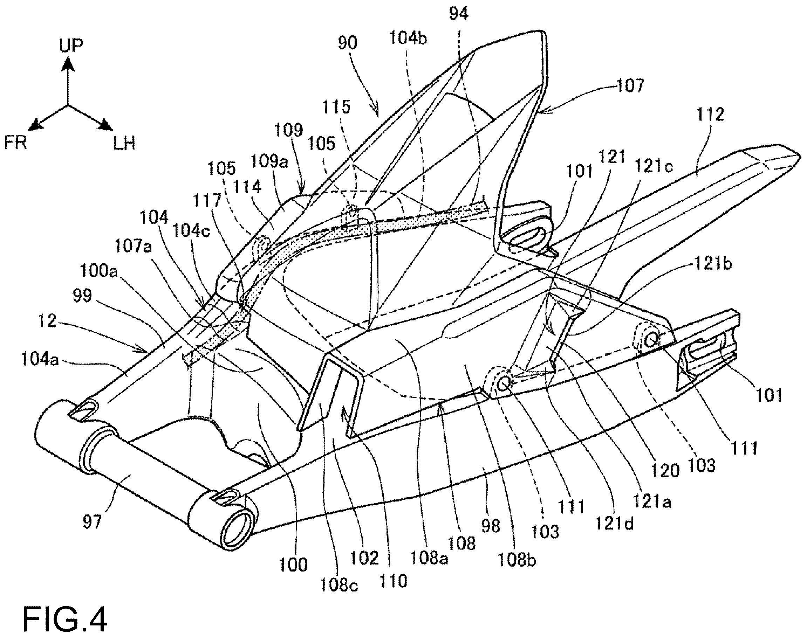

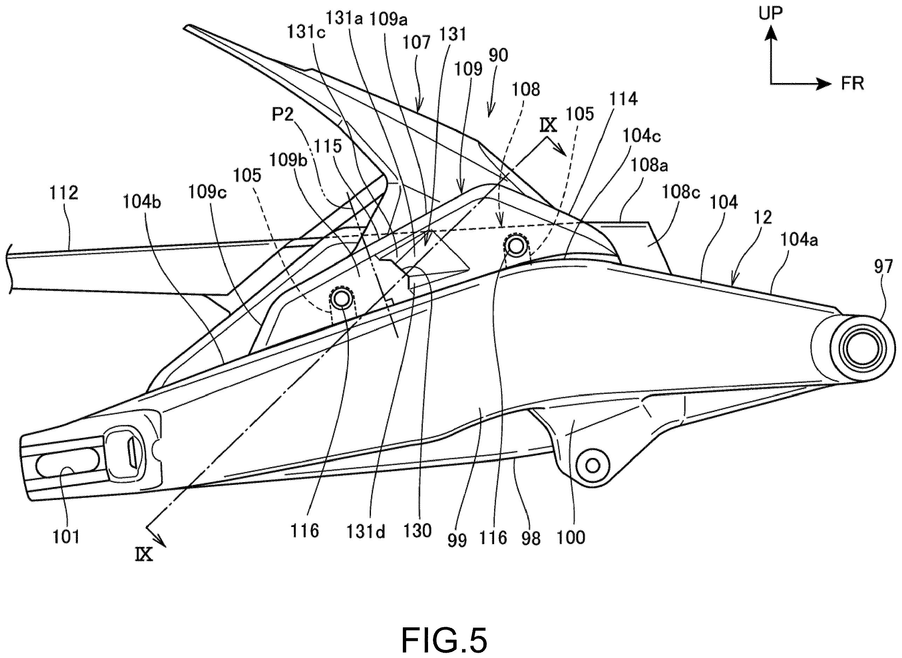

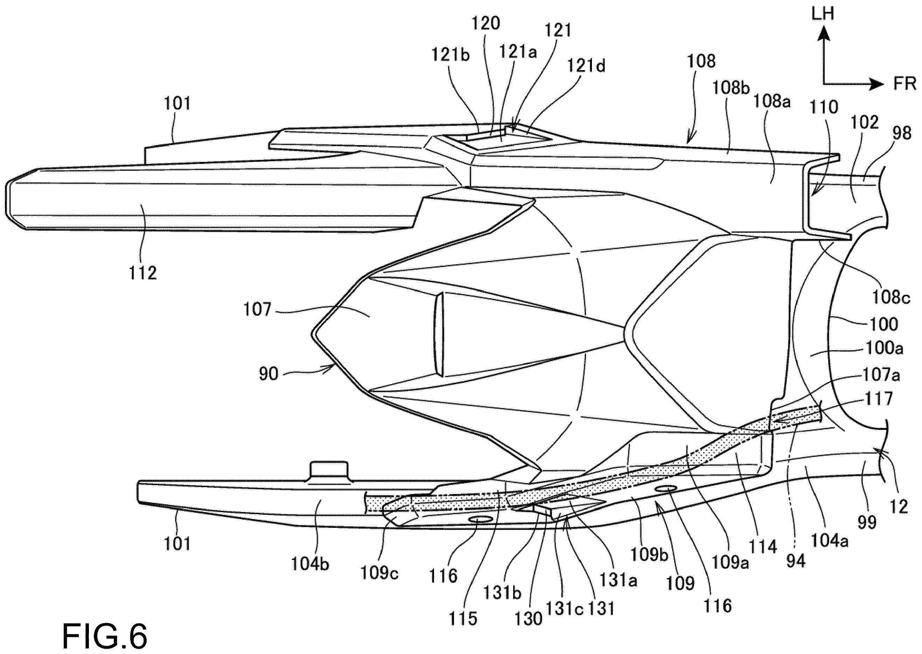

FIG. 4 is a perspective view depicting the state in which the inner fender 90 is attached to the swing arm 12. FIG. 5 is a right side view of the state in which the inner fender 90 is attached to the swing arm 12. FIG. 6 is a plan view when the state in which the inner fender 90 is attached to the swing arm 12 is viewed from the upper side.

Referring to FIG. 2 to FIG. 6, the swing arm 12 monolithically includes the following parts: a tubular pivot-joined part 97 that extends in the vehicle width direction and is pivotally supported by the pivot shaft 20; a one-side arm part 98 extending rearward from one end of the pivot-joined part 97; an other-side arm part 99 extending rearward from the other end of the pivot-joined part 97; and a cross member 100 that couples the one-side arm part 98 and the other-side arm part 99 in the vehicle width direction on the rear side of the pivot-joined part 97.

The pivot-joined part 97 is disposed between the left and right pivot frames 16 and the swing arm 12 is pivotally supported by the pivot shaft 20 stretched between the pivot frames 16.

The one-side arm part 98 and the other-side arm part 99 are pipe materials whose section orthogonal to their longitudinal direction has a substantially rectangular shape. The above-described rear suspension passes through the space between the pivot-joined part 97 and the cross member 100 and extends in the upward-downward direction. The rear wheel 3 is disposed between the one-side arm part 98 and the other-side arm part 99 and on the rear side of the cross member 100.

Axle support holes 101 that support the rear wheel axle 3a are made at the rear end parts of the one-side arm part 98 and the other-side arm part 99.

The one-side arm part 98 on the left side is the arm part of the side on which the drive chain 37 is provided and the drive chain 37 passes over an upper surface 102 of the one-side arm part 98 (upper surface of the swing arm) and under the lower surface. At the rear part of the upper surface 102, fender stays 103 protruding upward are provided in plurality in the front-rear direction.

The other-side arm part 99 on the right side is the arm part of the side on which the brake system 28 is provided. The brake hose 94 extends rearward along an upper surface 104 of the other-side arm part 99. The brake calliper 93 is provided over the axle support hole 101 of the other-side arm part 99. In FIG. 4 and FIG. 6, the brake hose 94 is so depicted that dots are added thereto so that the brake hose 94 can be easily viewed.

In side view, the upper surface 104 of the other-side arm part 99 includes a front part upper surface 104a extending in an upward rear direction from the pivot-joined part 97 toward the cross member 100 and a rear part upper surface 104b extending in a downward rear direction from the rear end of the front part upper surface 104a to the rear end of the upper surface 104. On the rear part upper surface 104b, fender stays 105 protruding upward are provided in plurality in the front-rear direction.

Furthermore, the upper surface 104 of the other-side arm part 99 includes a protruding part 104c (FIG. 4) that protrudes upward to be higher than an upper surface 100a of the cross member 100 on an outer lateral side of the cross member 100.

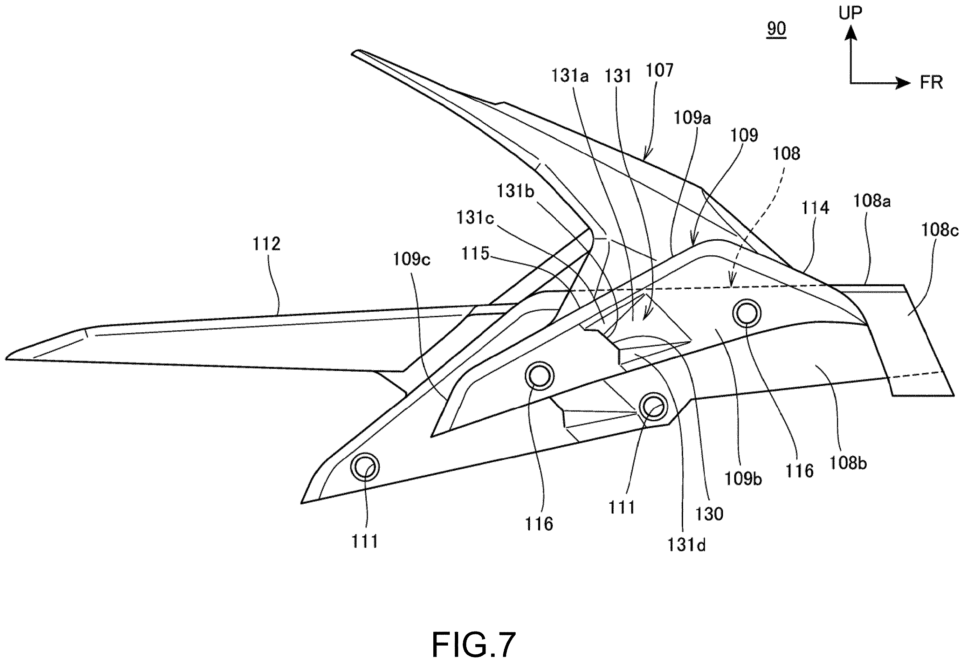

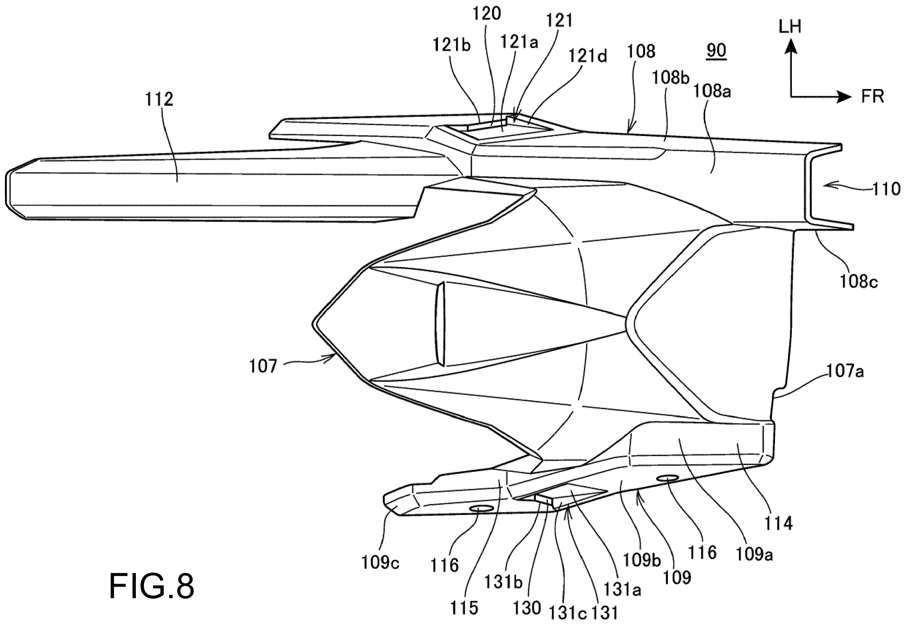

FIG. 7 is a right side view of the inner fender 90. FIG. 8 is a plan view when the inner fender 90 is viewed from the upper side.

Referring to FIG. 2 to FIG. 8, the inner fender 90 monolithically includes a fender main body part 107 that covers the upper part of the front end part of the rear wheel 3 from the upper side, a chain-side arm covering part 108 (chain case part) that covers the one-side arm part 98 on the side of the drive chain 37 from the upper side, and a brake-side arm covering part 109 that covers the other-side arm part 99 on the side of the brake system 28 from the upper side. The inner fender 90 is monolithically formed by resin casting for example.

The fender main body part 107 of the inner fender 90 is formed to curve along the outer shape of the rear wheel 3 in side view and extends in an upward rear direction from the front end part of the upper surface 100a (FIG. 4) of the cross member 100 to the vicinity of the upper surface of the front part of the rear wheel 3. Furthermore, in the vehicle width direction, the fender main body part 107 is formed into a curved shape that is upward projection according to the profile of the rear wheel 3, in which the central part in the vehicle width direction is the highest.

Moreover, in plain view, the rear part of the fender main body part 107 is formed into a tapered shape so that the size in the vehicle width direction may become smaller as the position becomes closer to the rear end.

The fender main body part 107 has, at the front end, a cut part 107a opened in the front-rear direction at the side part on the side of the other-side arm part 99.

Due to the covering of the front end part of the rear wheel 3 from the upper side by the fender main body part 107, water, mud, and so forth splashed by the rear wheel 3 are received by the fender main body part 107, which prevents the part in the vehicle body on the upper front side of the fender main body part 107 from getting dirty.

The chain-side arm covering part 108 of the inner fender 90 serves also as a chain case part that covers the part passing over the upper surface 102 in the drive chain 37 from the upper side and the lateral sides. The chain-side arm covering part 108 monolithically includes a case upper wall 108a that covers the drive chain 37 from the upper side, a case outer sidewall 108b (side surface of the fender) that covers the drive chain 37 from the outer lateral side, and a case inner sidewall 108c that covers the drive chain 37 from the inner lateral side.

The case upper wall 108a extends outward in the vehicle width direction from the lower part of a side part of the fender main body part 107 and is located over the drive chain 37. The case outer sidewall 108b extends from the outer edge of the case upper wall 108a toward the upper surface 102 on the lower side and is located on the outer lateral side of the drive chain 37. The case inner sidewall 108c is formed to protrude forward from the front surface of the lower part of the fender main body part 107 and the upper edge of the case inner sidewall 108c leads to the inner edge of the front end part of the case upper wall 108a. The case inner sidewall 108c is located on the inner lateral side of the drive chain 37. The front edges of the case upper wall 108a, the case outer sidewall 108b, and the case inner sidewall 108c form a chain passing port 110 through which the drive chain 37 passes from the inside of the chain-side arm covering part 108 to the outside.

The rear end of the case outer sidewall 108b is located on a lateral side of the front part of the driven sprocket 3b (FIG. 2). At the lower part of the rear part of the case outer sidewall 108b, fixing holes 111 through which fender fixing bolts 103a (FIG. 2) that fix the chain-side arm covering part 108 to the fender stays 103 pass are formed in plurality in the front-rear direction.

Furthermore, the chain-side arm covering part 108 includes a rearward extending part 112 that extends rearward along the drive chain 37 from the upper part of the rear end of the case upper wall 108a. The rearward extending part 112 extends beyond the position of the rear wheel axle 3a (FIG. 2) and to the rear side of the driven sprocket 3b, and covers the rear part of the drive chain 37 and the driven sprocket 3b from the upper side.

Due to the covering of the drive chain 37 by the chain-side arm covering part 108, spattering of oil of the drive chain 37 and so forth is prevented and the rider and so forth are prevented from getting contact with the drive chain 37.

The brake-side arm covering part 109 of the inner fender 90 serves also as a brake hose cover part that covers the brake hose 94 (FIG. 3) from the upper side and a lateral side. The brake-side arm covering part 109 monolithically includes a cover upper wall 109a that covers the brake hose 94 from the upper side and a cover outer sidewall 109b (side surface of the fender) that covers the brake hose 94 from the outer lateral side.

The cover upper wall 109a extends outward in the vehicle width direction from the vertically-intermediate part at a side part of the fender main body part 107 and is located over the brake hose 94. Specifically, in side view, the cover upper wall 109a includes a front upper wall part 114 extending in an upward rear direction along the inclination of the fender main body part 107 and a rear upper wall part 115 extending in a downward rear direction along the rear part upper surface 104b of the other-side arm part 99. The rear upper wall part 115 extends in the downward rear direction with a larger inclination than the rear part upper surface 104b.

The cover outer sidewall 109b extends from the outer edge of the cover upper wall 109a toward the upper surface 104 on the lower side and is located on the outer lateral side of the brake hose 94.

In side view, the brake-side arm covering part 109 extends rearward from a position overlapping with the front end part of the fender main body part 107 and its rear end part 109c is located near the front end of the brake calliper 93.

In the cover outer sidewall 109b, fixing holes 116 through which fender fixing bolts 105a (FIG. 3) that fix the brake-side arm covering part 109 to the fender stays 105 pass are formed in plurality in the front-rear direction.

The inner fender 90 is placed on the upper surface of the swing arm 12 and is fixed to the swing arm 12 through fastening of the fender fixing bolts 103a and the fender fixing bolts 105a from the outside in the vehicle width direction.

As depicted in FIG. 4, the front end part of the brake-side arm covering part 109 is placed on the protruding part 104c of the other-side arm part 99 and the cut part 107a of the fender main body part 107 is located on the inner lateral side of the protruding part 104c. The protruding part 104c meets the cut part 107a, which forms a hose passing hole 117 through which the brake hose 94 is made to pass to the inside of the inner fender 90.

The brake hose 94 that extends from the master cylinder 92 (FIG. 3) and is made to pass through the hose passing hole 117 extends rearward inside the brake-side arm covering part 109 along the rear part upper surface 104b of the other-side arm part 99 and is connected to the brake calliper 93. Furthermore, the brake hose 94 is covered from the upper side by the front upper wall part 114 and the rear upper wall part 115. This can protect the brake hose 94 by the brake-side arm covering part 109 and hide the brake hose 94 from the outside, which improvements the appearance.

The brake-side arm covering part 109 has a hose support part 118 (FIG. 3) on the inside surface of the cover outer sidewall 109b. The brake hose 94 is positioned inside the brake-side arm covering part 109 by being supported by the hose support part 118. Because it is possible to make the inner fender 90 support the brake hose 94 in this manner, a stay part that is provided on the swing arm 12 and is for supporting the brake hose 94 can be omitted and the structure of the swing arm 12 can be simplified.

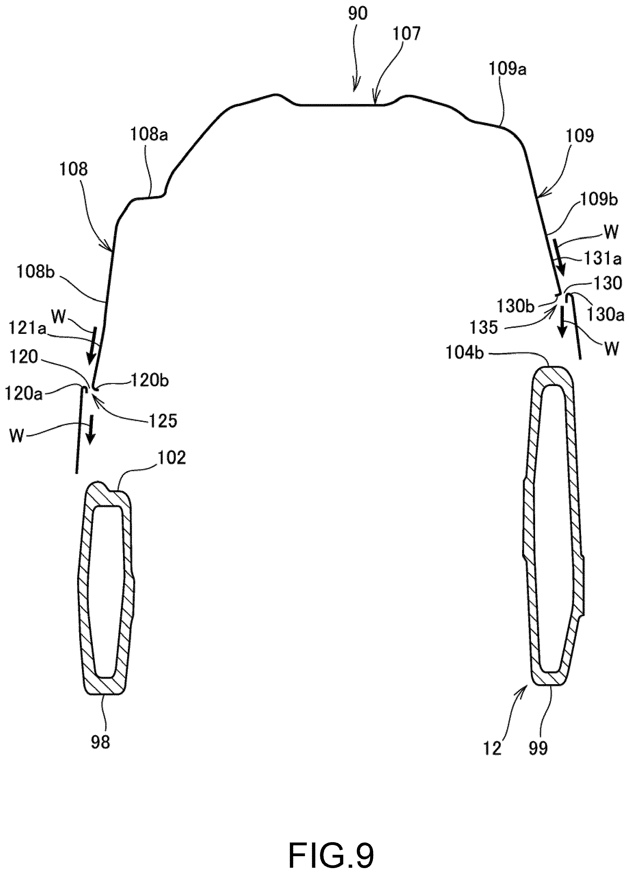

FIG. 9 is a sectional view along line IX-IX in FIG. 5.

Referring to FIG. 4 to FIG. 9, the inner fender 90 has opening planes 120 and 130 that accept a relative wind from the front side and cause the relative wind to flow rearward in the case outer sidewall 108b and the cover outer sidewall 109b, respectively, which are the left and right side surfaces.

As depicted in FIG. 8 and FIG. 9, the case outer sidewall 108b and the cover outer sidewall 109b are each provided with such an inclination that the part closer to the lower side is located closer to the outside in the vehicle width direction and the part closer to the rear side is located closer to the outside in the vehicle width direction. The lower edge of the case outer sidewall 108b is continuous with the upper edge of the outer side surface of the one-side arm part 98 and the lower edge of the cover outer sidewall 109b is continuous with the upper edge of the outer side surface of the other-side arm part 99.

The case outer sidewall 108b has a side surface recess 121 formed in such a manner that part of the intermediate part of the case outer sidewall 108b in the front-rear direction is hollowed inward in the vehicle width direction.

The side surface recess 121 includes the following parts: an in-recess side surface part 121a (inclined surface) that is the bottom surface of the side surface recess 121 and faces the outer lateral side; an in-recess rear surface part 121b that links the rear edge of the in-recess side surface part 121a and the outer side surface of the case outer sidewall 108b; an in-recess upper surface part 121c that links the upper edge of the in-recess side surface part 121a and the outer side surface of the case outer sidewall 108b; and an in-recess lower surface part 121d that links the lower edge of the in-recess side surface part 121a and the outer side surface of the case outer sidewall 108b.

The opening plane 120 is a plane obtained by making an opening in the in-recess rear surface part 121b facing the front side of the vehicle and is a plane opened toward the front side of the vehicle.

The in-recess side surface part 121a is continuous with the case outer sidewall 108b on the front side of the side surface recess 121 and is so inclined that the part closer to the rear side is located closer to the outside in the vehicle width direction. That is, the in-recess side surface part 121a is an inclined surface extending outward in the vehicle width direction from the front side toward the opening plane 120, and the opening plane 120 is located at the rear end of this inclined surface.

Furthermore, the in-recess upper surface part 121c and the in-recess lower surface part 121d are provided with such inclinations that the interval between the in-recess upper surface part 121c and the in-recess lower surface part 121d becomes smaller as the position becomes closer to the opening plane 120.

As depicted in FIG. 2 and FIG. 9, the opening plane 120 is formed to have a labyrinth structure 125 so that the inside of the opening plane 120 may be invisible in side view. Specifically, the labyrinth structure 125 has an outer edge bent part 120a obtained by folding back the outer edge part of the opening plane 120 in the vehicle width direction to the rear side into a U-shape and an inner edge bent part 120b obtained by folding back the inner edge part of the opening plane 120 to the inside in the vehicle width direction at a substantially right angle. In addition, the labyrinth structure 125 is so formed that the outer edge bent part 120a is located on the front side relative to the inner edge bent part 120b.

Because the outer edge bent part 120a is located on the front side relative to the inner edge bent part 120b, the aperture of the opening plane 120 is hidden by the outer edge bent part 120a in side view.

Referring to FIG. 2 and FIG. 4, in side view, the opening plane 120 is made substantially perpendicular to the upper surface 102 of the one-side arm part 98 along a perpendicular line PI extending upward perpendicular to the upper surface 102. Specifically, the opening plane 120 is made at such an angle as to be somewhat tilted rearward relative to the line perpendicular to the upper surface 102. Furthermore, in side view, the opening plane 120 is located between the front and rear fender fixing bolts 103a and is disposed at a position overlapping with the drive chain 37 from the outside. Moreover, in side view, the opening plane 120 is disposed on the rear side relative to the front surface of the rear wheel 3 and on the front side relative to the driven sprocket 3b.

The cover outer sidewall 109b of the brake-side arm covering part 109 has a side surface recess 131 formed in such a manner that part of the intermediate part of the cover outer sidewall 109b in the front-rear direction is hollowed inward in the vehicle width direction.

The side surface recess 131 includes the following parts: an in-recess side surface part 131a (inclined surface) that is the bottom surface of the side surface recess 131 and faces the outer lateral side; an in-recess rear surface part 131b that links the rear edge of the in-recess side surface part 131a and the outer side surface of the cover outer sidewall 109b; an in-recess upper surface part 131c that links the upper edge of the in-recess side surface part 131a and the outer side surface of the cover outer sidewall 109b; and an in-recess lower surface part 131d that links the lower edge of the in-recess side surface part 131a and the outer side surface of the cover outer sidewall 109b.

The opening plane 130 is a plane obtained by making an opening in the in-recess rear surface part 131b facing the front side of the vehicle and is a plane opened toward the front side of the vehicle.

The in-recess side surface part 131a is continuous with the cover outer sidewall 109b on the front side of the side surface recess 131 and is so inclined that the part closer to the rear side is located closer to the outside in the vehicle width direction. That is, the in-recess side surface part 131a is an inclined surface extending outward in the vehicle width direction from the front side toward the opening plane 130, and the opening plane 130 is located at the rear end of this inclined surface.

Furthermore, the in-recess upper surface part 131c and the in-recess lower surface part 131d are provided with such inclinations that the interval between the in-recess upper surface part 131c and the in-recess lower surface part 131d becomes smaller as the position becomes closer to the opening plane 130.

As depicted in FIG. 5 and FIG. 9, the opening plane 130 is formed to have a labyrinth structure 135 so that the inside of the opening plane 130 may be invisible in side view. Specifically, the labyrinth structure 135 has an outer edge bent part 130a obtained by folding back the outer edge part of the opening plane 130 in the vehicle width direction to the rear side into a U-shape and an inner edge bent part 130b obtained by folding back the inner edge part of the opening plane 130 to the inside in the vehicle width direction at a substantially right angle. In addition, the labyrinth structure 135 is so formed that the outer edge bent part 130a is located on the front side relative to the inner edge bent part 130b. Because the outer edge bent part 130a is located on the front side relative to the inner edge bent part 130b, the aperture of the opening plane 130 is hidden by the outer edge bent part 130a in side view.

Referring to FIG. 3 and FIG. 5, in side view, the opening plane 130 is made substantially perpendicular to the rear part upper surface 104b of the other-side arm part 99 along a perpendicular line P2 extending upward perpendicular to the rear part upper surface 104b. Specifically, the opening plane 130 is made at such an angle as to be somewhat tilted rearward relative to the line perpendicular to the rear part upper surface 104b. Furthermore, in side view, the opening plane 130 is located between the front and rear fender fixing bolts 105a. Moreover, in side view, the opening plane 130 is disposed on the rear side relative to the front surface of the rear wheel 3 and on the front side relative to the brake calliper 93.

Furthermore, as depicted in FIG. 1, in side view, the muffler 34 disposed to extend in an upward rear direction overlaps with the rear part of the brake-side arm covering part 109 and the rear part of the other-side arm part 99 from the outer lateral side. The opening plane 130 is disposed inside the muffler 34 in the vehicle width direction and at a position overlapping with the front part of the muffler 34.

Moreover, as depicted in FIG. 3, the brake disc 3c and the brake calliper 93 are disposed on an extended line L of a straight line that extends to pass through the opening plane 130 and is parallel to the rear part upper surface 104b of the other-side arm part 99.

As depicted in FIG. 2, FIG. 3 and FIG. 9, when the motorcycle 1 travels, relative winds W as part of relative winds flowing around the inner fender 90 flow rearward along the case outer sidewall 108b and the cover outer sidewall 109b and flow into the opening plane 120 and the opening plane 130. The relative winds W that have flowed into the opening plane 120 and the opening plane 130 pass inside the chain-side arm covering part 108 and the brake-side arm covering part 109 and are discharged rearward. By controlling part of the relative winds flowing along the inner fender 90 so that the part of the relative winds may pass through the inside of the inner fender 90 from the opening plane 120 and the opening plane 130 and be discharged rearward in this manner, resistance due to the relative winds can be reduced and the fuel consumption of the motorcycle 1 can be improved.

Furthermore, the relative winds W flow along the in-recess side surface parts 121a and 131a, the in-recess upper surface parts 121c and 131c, and the in-recess lower surface parts 121d and 131d and are led to the opening plane 120 and the opening plane 130. This allows a large amount of relative wind to flow into the opening plane 120 and the opening plane 130.

Moreover, the opening plane 120 and the opening plane 130 are made substantially perpendicular to the upper surface 102 and the rear part upper surface 104b of the swing arm 12. Thus, the area of the apertures can be set large for the relative winds flowing along the upper surface 102 and the rear part upper surface 104b and the relative winds can be allowed to efficiently flow. In addition, the opening plane 120 and the opening plane 130 can be disposed compactly in the front-rear direction.

The relative wind W that has flowed into the opening plane 130 flows rearward between the cover upper wall 109a and the rear part upper surface 104b of the other-side arm part 99 along the extended line L of a straight line parallel to the rear part upper surface 104b, and impinges on the brake calliper 93 and the brake disc 3c located on the extended line L. This can effectively cool the brake calliper 93 and the brake disc 3c by the relative wind W.

Furthermore, the opening plane 120 and the opening plane 130 are made in the case outer sidewall 108b and the cover outer sidewall 109b, respectively, which are the left and right side surfaces of the inner fender 90. Thus, the resistance due to the relative winds can be reduced with a favourable balance between the left and right sides and the traveling performance is high.

Moreover, the relative wind W flows into the opening plane 130 made at a position overlapping with the muffler 34 in side view. Thus, the relative wind can be efficiently led to the inside of the muffler 34 in the vehicle width direction and the muffler 34 can be effectively cooled by the relative wind.

In addition, the opening plane 120 and the opening plane 130 are disposed on the rear side relative to the front surface of the rear wheel 3. This can prevent water and so forth thrown up by the rear wheel 3 from flowing back into the opening plane 120 and the opening plane 130 from the inside of the inner fender 90.

As described above, according to the embodiment to which the present invention is applied, the motorcycle 1 includes the inner fender 90 that covers at least part of the rear wheel 3 and the inner fender 90 is attached to the upper part of the swing arm 12 that supports the rear wheel 3. Furthermore, the opening planes 120 and 130 that accept the relative winds W from the front side and cause the relative winds W to flow rearward are made in the case outer sidewall 108b and the cover outer sidewall 109b that are the side surfaces of the inner fender 90. This causes the relative winds W from the front side to pass through the opening planes 120 and 130 in the case outer sidewall 108b and the cover outer sidewall 109b and go rearward. Thus, the resistance due to the relative winds can be reduced and the fuel consumption can be improved.

Furthermore, in side view, the brake disc 3c and the brake calliper 93 are disposed on the extended line L of a straight line that extends to pass through the opening plane 130 and is parallel to the rear part upper surface 104b of the swing arm 12. The relative wind W passing through the opening plane 130 flows along the extended line L and impinges on the brake disc 3c and the brake calliper 93 located on this extended line L. Thus, the resistance can be reduced by causing the relative wind W to flow into the opening plane 130. In addition, the brake disc 3c and the brake calliper 93 can be cooled by the relative wind W that has flowed into the opening plane 130.

In addition, the opening planes 120 and 130 are made perpendicular to the upper surface 102 and the rear part upper surface 104b of the swing arm 12. Thus, the opening planes 120 and 130 can be compactly made according to the shapes of the upper surface 102 and the rear part upper surface 104b. In addition, the opening planes 120 and 130 can be made inconspicuous from the outside, which provides favourable appearance. Furthermore, the area of the opening planes 120 and 130 can be set large with respect to the flow of the relative winds and the relative winds can be caused to efficiently flow. The perpendicularity of the opening planes 120 and 130 to the upper surface 102 and the rear part upper surface 104b includes not only perfect perpendicularity but also a forward or rearward tilt with respect to the perpendicular line within the range in which the relative winds can be caused to efficiently flow.

Moreover, the opening planes 120 and 130 are formed with the labyrinth structures 125 and 135 to prevent the inside of the opening planes 120 and 130 from being visible through the apertures thereof in side view. This can prevent rainwater, gravel, and so forth from the lateral sides from entering the inside from the opening planes 120 and 130, and improve the appearance.

Furthermore, the opening plane 130 is made at a position overlapping with the muffler 34 of the exhaust unit 35 in side view. Thus, by utilizing an airstream flowing into the opening plane 130 made at the position overlapping with the muffler 34, the muffler 34 can be effectively cooled and accumulation of heat around the muffler 34 can be suppressed.

In addition, the inner fender 90 monolithically includes the chain-side arm covering part 108 that covers the drive chain 37 to drive the rear wheel 3. Therefore, a dedicated chain case does not need to be additionally provided and the number of parts can be reduced.

Furthermore, the inner fender 90 has the in-recess side surface parts 121a and 131a extending outward in the vehicle width direction from the front side toward the opening planes 120 and 130. Thus, the relative winds W flowing from the front side toward the rear side can be induced to the opening planes 120 and 130 along the in-recess side surface parts 121a and 131a. This can cause the relative winds W to efficiently flow into the opening planes 120 and 130 and can improve the fuel consumption.

Moreover, the brake hose 94 connected to the brake calliper 93 is provided to pass through the inside of the inner fender 90. The inner fender 90 is provided to cover the brake hose 94 disposed inside from the upper side and at least part of the brake hose 94 is supported by the hose support part 118 provided on the inner fender 90. This can protect the brake hose 94 from the upper side by the inner fender 90 and support the brake hose 94 with a simple structure to support it on the inner fender 90.

The above-described embodiment shows one aspect to which the present invention is applied and the present invention is not limited to the above-described embodiment.

In the above-described embodiment, it is explained that the brake disc 3c and the brake calliper 93 are disposed on the extended line L of a straight line that extends to pass through the opening plane 130 and is parallel to the rear part upper surface 104b of the swing arm 12 in side view. However, the present invention is not limited thereto. For example, a configuration may be employed in which at least either the brake disc 3c or the brake calliper 93 is disposed on an extended line along the perpendicular direction to the opening plane 130, i.e. on an extended line of the normal to the opening plane 130, in side view. In the case of employing this configuration, the opening plane 130 is disposed to have posture closer to the vertical posture than in the state depicted in FIG. 3. Due to this, the relative wind that passes through the opening plane 130 and flows rearward, flows along the above-described extended line of the normal and impinges on the brake disc 3c and the brake calliper 93. Thus, the brake disc 3c and the brake calliper 93 can be efficiently cooled.

Furthermore, although the explanation is made by taking the motorcycle 1 as an example of the saddle-type vehicle in the above-described embodiment, the present invention is not limited thereto. For example, the present invention may be applied to a saddle-type vehicle having three or more wheels for example.

### Main reference symbols:

1 Motorcycle
3 Rear wheel
3c Brake disc
12 Swing arm
35 Exhaust unit
37 Drive chain (chain)
90 Inner fender (fender)
93 Brake caliper
94 Brake hose
102 Upper surface (upper surface of swing arm)
104b Rear part upper surface (upper surface of swing arm)
108 Chain-side arm covering part (chain case part)
108b Case outer sidewall (side surface of fender)
109b Cover outer sidewall (side surface of fender)
118 Hose support part
120 and 130 Opening plane
121a and 131aln-recess side surface part (inclined surface)
125 and 135 Labyrinth structure
L Extended line

## Claims

1. A saddle-type vehicle including a fender (90) that covers at least part of a rear wheel (3) and is attached to an upper part of a swing arm (12) that supports the rear wheel (3), wherein
opening planes (120, 130) that accept a relative wind from a front side and cause the relative wind to flow rearward are made in side surfaces (108b, 109b) of the fender (90);
a brake caliper (93) is disposed on an extended line (L) of a straight line that extends to pass through the opening plane (130) and is parallel to an upper surface (104b) of the swing arm (12) in side view; **characterised in that** a brake hose (94) connected to the brake caliper (93) is provided to pass through inside of the fender (90), and the fender (90) is provided to cover the brake hose (94) disposed inside from an upper side, and at least part of the brake hose (94) is supported by a hose support part (118) provided on the fender (90).

2. The saddle-type vehicle according to claim 1, **characterised in that** the opening planes (120, 130) are made perpendicular to upper surfaces (102, 104b) of the swing arm (12).

3. The saddle-type vehicle according to claim 1 or 2, **characterised in that** the opening planes (120, 130) are formed with labyrinth structures (125, 135) to prevent inside of the opening planes (120, 130) from being visible through apertures of the opening planes (120, 130) in side view.

4. The saddle-type vehicle according to any of claims 1 to 3, **characterised in that** the opening plane (130) is made at a position overlapping with an exhaust unit (35) in side view.

5. The saddle-type vehicle according to any of claims 1 to 4, **characterised in that** the fender (90) monolithically includes a chain case part (108) that covers a chain (37) to drive the rear wheel (3).

6. The saddle-type vehicle according to any of claims 1 to 5, **characterised in that** the fender (90) has inclined surfaces (121a, 131a) extending outward in vehicle width direction from a front side toward the opening planes (120, 130).

## Patentansprüche

1. Fahrzeug vom Satteltyp, aufweisend eine Radabdeckung (90), die wenigstens Teil eines Hinterrads (3) abdeckt und an einem oberen Teil eines Pendelarms (12) befestigt ist, der das Hinterrad (3) trägt, wobei
in den Seitenflächen (108b, 109b) der Radabdeckung (90) Öffnungsebenen (120, 130) gebildet sind, die einen Fahrtwind von der Vorderseite aufnehmen und eine Strömung des Fahrtwinds nach hinten bewirken;
ein Bremssattel (93) auf einer verlängerten Linie (L) einer geraden Linie, die sich erstreckt, um durch die Öffnungsebene (130) zu gelangen und parallel einer oberen Fläche (140b) des Pendelarms (12) in einer Seitenansicht ist, angeordnet ist; **dadurch gekennzeichnet, dass**
ein mit dem Bremssattel (93) verbundener Bremsschlauch (94) vorgesehen ist, um durch das Innere der Radabdeckung (90) zu gelangen, und die Radabdeckung (90) vorgesehen ist, den innen angeordneten Bremsschlauch von einer oberen Seite abzudecken, und wenigstens ein Teil des Bremsschlauchs von einem Schlauchträgerteil (118) gestützt ist, der an der Radabdeckung (90) vorgesehen ist.

2. Fahrzeug vom Satteltyp nach Anspruch 1, **dadurch gekennzeichnet, dass** die Öffnungsebenen (120, 130) senkrecht zu oberen Flächen (102, 104b) des Pendelarms (12) gebildet sind.

3. Fahrzeug vom Satteltyp nach Anspruch 1 oder 2, **dadurch gekennzeichnet, dass** die Öffnungsebenen (120, 130) mit Labyrinthstrukturen (125, 135) gebildet sind, um zu verhindern, dass eine Innenseite der Öffnungsebenen (120, 130) in Seitenansicht durch Öffnungen der Öffnungsebenen (120, 130) sichtbar sind.

4. Fahrzeug vom Satteltyp nach einem der Ansprüche 1 bis 3, **dadurch gekennzeichnet, dass** die Öffnungsebene (130) in einer Lage gebildet ist, die in Seitenansicht mit einer Auspuffeinheit (35) überlappt.

5. Fahrzeug vom Satteltyp nach einem der Ansprüche 1 bis 4, **dadurch gekennzeichnet, dass** die Radabdeckung (90) in monolithischer Art ein Kettenhüllenteil (108) aufweist, das eine Kette (37) zum Antrieb des Hinterrads (3) abdeckt.

6. Fahrzeug vom Satteltyp nach einem der Ansprüche 1 bis 5, **dadurch gekennzeichnet, dass** die Radabdeckung (90) geneigte Flächen (121a, 131a) aufweist, die sich in der Fahrzeugbreitenrichtung von einer Vorderseite nach außen in Richtung auf die Öffnungsebenen (120, 130) erstrecken.

## Revendications

1. Véhicule du type à selle, comprenant un garde-boue (90) qui couvre au moins une partie d'une roue arrière (3) et fixé à une partie supérieure d'un bras oscillant (12) qui supporte la roue arrière (3), dans lequel
les plans d'ouverture (120, 130) qui acceptent un vent relatif depuis un côté avant et entraînent le flux du vent relatif vers l'arrière sont réalisés dans les surfaces latérales (108b, 109b) du garde-boue (90) ;
un étrier de frein (93) est placé sur une ligne étendue (L) d'une ligne droite qui s'étend pour passer à travers le plan d'ouverture (130) et parallèle à une surface supérieure (104b) du bras oscillant (12) en vue latérale **caractérisé en ce qu'**
une conduite de frein (94) reliée à l'étrier de frein (93) est fournie et passe à l'intérieur du garde-boue (90), et le garde-boue (90) est conçu pour couvrir la conduite de frein (94) placée à l'intérieur d'un côté supérieur, et au moins une partie de la conduite de frein (94) est supportée par une partie de support de la conduite (118) prévue sur le garde-boue (90).

2. Véhicule du type à selle selon la revendication 1, **caractérisé en ce que** les plans d'ouverture (120, 130) sont perpendiculaires aux surfaces supérieures (102, 104b) du bras oscillant (12).

3. Véhicule du type à selle selon la revendication 1 ou 2, **caractérisé en ce que** les plans d'ouverture (120, 130) sont formés avec des structures en labyrinthe (125, 135) pour empêcher l'intérieur des plans d'ouverture (120, 130) d'être visibles à travers les ouvertures des plans d'ouverture (120, 130) en vue latérale.

4. Véhicule du type à selle selon l'une des revendications 1 à 3, **caractérisé en ce que** le plan d'ouverture (130) est placé à une position se chevauchant avec une unité d'échappement (35) en vue latérale.

5. Véhicule du type à selle selon l'une quelconque des revendications 1 à 4, **caractérisé en ce que** le garde-boue (90) comprend monolithiquement une partie de carter de chaîne (108) qui couvre une chaîne (37) pour entraîner la roue arrière (3).

6. Véhicule du type à selle selon l'une quelconque des revendications 1 à 5, **caractérisé en ce que** le garde-boue (90) a des surfaces inclinées (121a, 131a) s'étendant vers l'extérieur dans la direction de la largeur du véhicule depuis un côté avant vers les plans d'ouverture (120, 130).
